# EUROPEAN PATENT APPLICATION

(11) **EP 1 450 369 A2**
(43) Date of publication of application: **25.08.2004**
(21) Application number: 04004035.4
(22) Date of filing: 23.02.2004
(51) Int. Cl.: G11B 27/00

(54) **Resume mark managing method**

(30) Priority: 21.02.2003 KR 2003010906; 19.05.2003 KR 2003031481
(71) Applicant: LG ELECTRONICS INC., Seoul 150-010 (KR)
(72) Inventor: Koh, Po Hyoung, Suwon-si Kyunggi-do 440-320, Korea (KR); Shin; Yong Soo, Anyang-si Kyunggi-do 431-080, Korea (KR)
(74) Representative: VOSSIUS & PARTNER

(57) **Abstract**

Resume mark managing methods and apparatus for A/V data can define resume marks respectively representing last playback positions where playback of A/V data has been stopped. When playback of A/V data recorded on a recording medium is stopped, a resume mark separated from the other resume marks is stored to subsequently access a last playback position where the playback is stopped. When a resumed playback operation is requested for the A/V data, a selected last playback position is searched for, based on stored resume marks such as in a bookmark function, so as to play back the A/V data from the selected last playback position. Accordingly, it is possible to successively play back the A/V data from a selected one of the last playback positions.

## Description

The present invention relates to a recording/reproducing apparatus and method therefore, and more particularly to a resume mark managing method and apparatus for A/V data that stores last playback positions where playback of A/V data has been stopped.

When playback of a recording medium, such as an optical disc, conducted in a recording/reproducing apparatus such as an optical disc apparatus, is stopped at the request of the user, an operation of searching for the last playback position where the playback operation is stopped is carried out to generate playback resume information such as a resume mark. The resume mark is stored in the apparatus so that the recording medium is successively played back from the last playback position. When the user subsequently requests playback of the optical disc, the optical disc apparatus searches for the last playback position where the playback of the optical disc had been stopped using the stored resume mark. Then, a resumed playback operation for playing back the optical disc from the last playback position is performed.

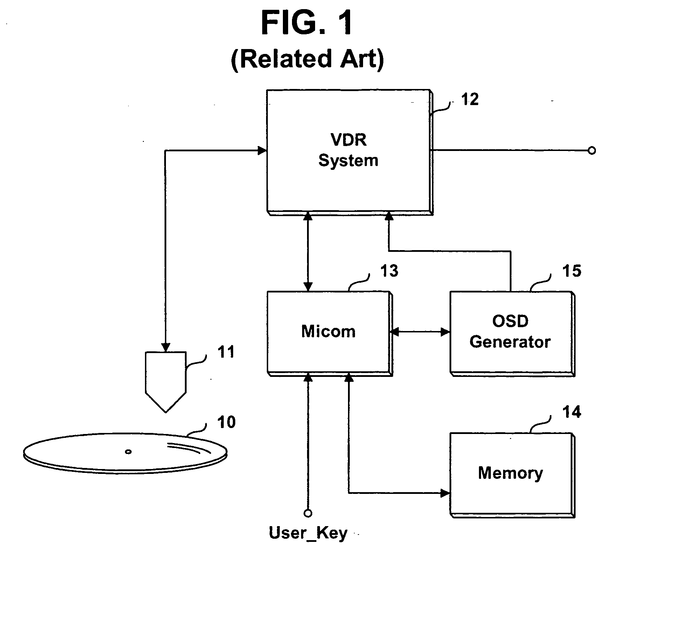

Fig. 1 illustrates a related art optical disc apparatus such as an optical disc recorder. As shown in Fig. 1, the optical disc apparatus includes an optical pick-up 11, a video disc recording (VDR) system 12, a microcomputer 13, a memory 14, and an on-screen display (OSD) generator 15. In accordance with a key input entered by the user, the VDR system 12 records data on an optical disc 10 loaded in the optical disc apparatus, or reproduces data recorded on the optical disc 10.

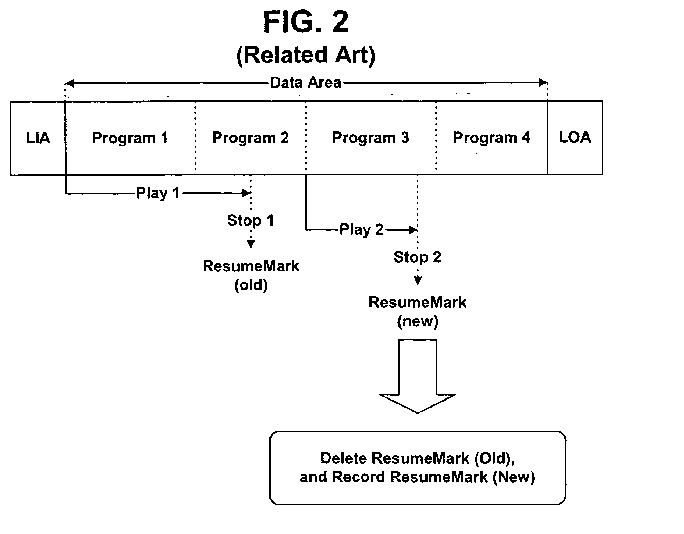

The optical disc 10 has a lead-in area (LIA), a data area, and a lead-out area (LOA) as shown in Fig. 2. When playback of the optical disc 10 conducted in the optical disc apparatus is stopped in accordance with the user key input, the microcomputer 13 searches the optical disc 10 for a last playback position where the playback is stopped, and stores information about the searched last playback position in the memory 14 as a resume mark. The resume mark enables successive playback of the optical disc 10 from the last playback position. Where the optical disc 10 is a re-writable disc, the resume mark, which is the last playback position information temporarily stored in the memory 14, is recorded on a particular recording field such as a resume mark field assigned to the LIA of the optical disc 10.

The resume mark operation will be described in conjunction with the case in which first to fourth programs Program 1 to Program 4 are written on the data area of the optical disc 10. For example, when playback of the optical disc 10 is stopped at the request of the user during playback of the second program, the microcomputer 13 generates a resume mark representing information about a last playback position where the playback is stopped, and stores the generated resume mark in the memory 14. Where the optical disc is a re-writable optical disc, the resume mark stored in the memory 14 can also be recorded on a particular recording field of the optical disc. The last playback position information stored as the resume mark may include one or both of a presentation time stamp (PTS) and an address, such as a physical section number, which correspond to the last playback position.

When playback of the optical disc 10 is carried out again, and subsequently stopped at the request of the user during playback of the third program, the microcomputer 13 generates a new resume mark representing information about a last playback position where the playback is stopped, and stores the generated resume mark in the memory 14. At this time, the old resume mark previously stored in the memory 14 is deleted, and the new resume mark is stored in place of the old resume mark. That is, the resume mark is updated. Also, the resume mark stored in the memory in accordance with the updating operation may be recorded on the particular recording area of the optical disc, in place of the resume mark previously stored in the particular recording area.

As described above, the related art apparatus and methods have various disadvantages. In the related art resume mark recording and managing methods, only one resume mark is used that corresponds to a last playback position where playback of a recording medium is most recently stopped. Although it is possible to carry out a resume playback operation for the recording medium itself, one cannot manage a plurality of last playback positions stored in the recording medium or apparatus as associated resume marks, respectively. Thus, there is a problem in that it is difficult or impossible to search for respective last playback positions of programs, playback of which has been stopped, and thus, to successively play back those programs from respective last playback positions thereof.

The above references are incorporated by reference herein where appropriate for appropriate teachings of additional or alternative details, features and/or technical background.

An object of the invention is to solve at least the above problems and/or disadvantages and to provide at least the advantages described hereinafter.

Another object of the invention is to provide a resume mark managing method and apparatus that defines resume marks respectively corresponding to last playback positions where playback of data has been stopped to allow the data to be successively played back from a selected one of the last playback positions.

Another object of the invention is to provide a resume mark managing method and apparatus for A/V data that defines resume marks respectively corresponding to last playback positions where playback of A/V data has been stopped to allow the A/V data to be successively played back from a selected one of the last playback positions thereby being capable of searching for the last playback positions by referring to the resume marks.

Another object of the invention is to provide a resume mark managing method and apparatus for A/V data that defines resume marks respectively corresponding to last playback positions where playback of A/V data has been stopped using bookmarks as at least additional resume marks.

Another object of the invention is to provide a resume mark managing method and apparatus for A/V data that defines resume marks respectively corresponding to last playback positions where playback of A/V data has been stopped in each of a plurality of programs stored on a recording medium so playback of each program can be independently controlled.

In order to achieve at least the above objects and advantages in whole or in part, the present invention provides a method that includes providing data stored on a recording medium and using a resume mark for the data including last playback position information and mark type information associated with the resume mark, wherein the mark type includes each of first mark type and a second mark type different from the first mark type.

To further achieve at least the above objects and advantages in whole or in part, the present invention provides a resume mark managing method for data that includes reading two or more resume marks each recorded with a last playback position of a corresponding data and playing back the corresponding data recorded on a recording medium based on a selected one of the read resume marks.

To further achieve at least the above objects and advantages in whole or in part, the present invention provides a resume mark managing method for A/V data that includes identifying information about a current last playback position of data recorded on a recording medium where the playback is stopped, recording last playback position information from a resume mark as a bookmark in bookmark information and updating the resume mark with the current last playback position information.

To further achieve at least the above objects and advantages in whole or in part, the present invention provides a resume mark managing method for A/V data that includes if playback of A/V data recorded on a recording medium is stopped, identifying information about a last playback position where the playback is stopped and recording the identified last playback position information as a bookmark in bookmark information recorded on the recording medium.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:

Fig. 1 is a block diagram illustrating a related art optical disc apparatus such as an optical disc recorder;

Fig. 2 is a diagram illustrating a related art resume mark managing method;

Fig. 3 is a diagram illustrating an embodiment of a syntax of a resume mark defined in accordance with the present invention;

Fig. 4 is a diagram illustrating a resume mark managing method for A/V data in accordance with an embodiment of the present invention;

Fig. 5 is a diagram illustrating, in the form of a table, resume marks stored in an optical disc apparatus in accordance with an embodiment of the present invention is applied;

Fig. 6 is a diagram illustrating a resume mark managing method for A/V data in accordance with another embodiment of the present invention; and

Fig. 7 is a diagram illustrating a exemplary resume mark recorded in an updating operation and a bookmark substitutively recorded in accordance with the embodiment of the present invention shown in Fig. 6.

### DETAILED DESCRIPTION OF PREFERRED EMBODIMENTS

Embodiments of resume mark managing methods and apparatus for A/V data according to the present invention are applicable to diverse digital recording media such as optical discs or hard disks (HDD). Also, such embodiments can be applied to a digital recording/reproducing apparatus such as an optical disc recorder configured as shown in Fig. 1.

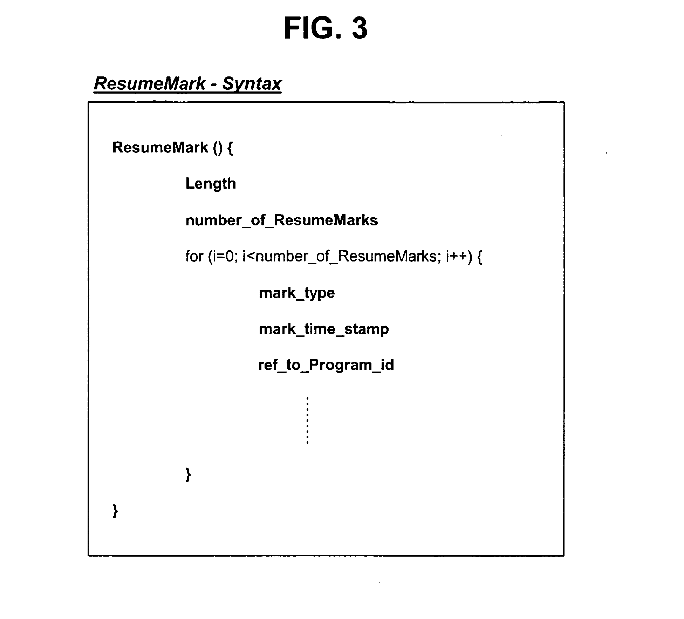

An embodiment of a syntax of resume mark information newly determined and defined in accordance with the present invention is illustrated in Fig. 3. As shown in Fig. 3, the resume mark information can include information representing the data length of the resume mark information (e.g., Length) and information representing the number of resume marks (e.g., ResumeMark) in the resume mark information.

Each resume mark can include a mark type (mark_type) and a mark time stamp (mark_time_stamp). Where embodiments of the present invention are applied to a recording medium recorded with a plurality of programs, resume marks are preferably controlled or managed by the unit of programs. Accordingly, each resume mark can additionally include program IDs (e.g., ref_to_Program_id) for respective programs.

The mark type may include a plurality of values represented by bits, for example 8 bits. In the case of a master resume mark, its mark type may have a value of "00001111b". On the other hand, in the case of a general resume mark, its mark type may have a value of "00000000b". The master resume mark is preferably a resume mark representing a last playback position where playback of an associated recording medium has most recently been stopped.

The mark time stamp can be access information for searching for an associated last playback position. The mark time stamp may include a presentation time stamp (PTS) corresponding to an associated last playback position, a physical sector number (PSN) corresponding to the associated last playback position or the like. Also, the program ID is information for identifying an associated program. The program ID may be an intrinsic ID assigned to the associated program, the name of the associate program or the like.

The resume marks for A/V data newly defined in accordance with embodiments of the present invention may be recorded as new navigation information on an optical disc such as a digital versatile disc (DVD), a Blu-ray disc or the like. Also, the resume marks may be applicable to an optical disc apparatus for recording data on such an optical disc or playing back the optical disc.

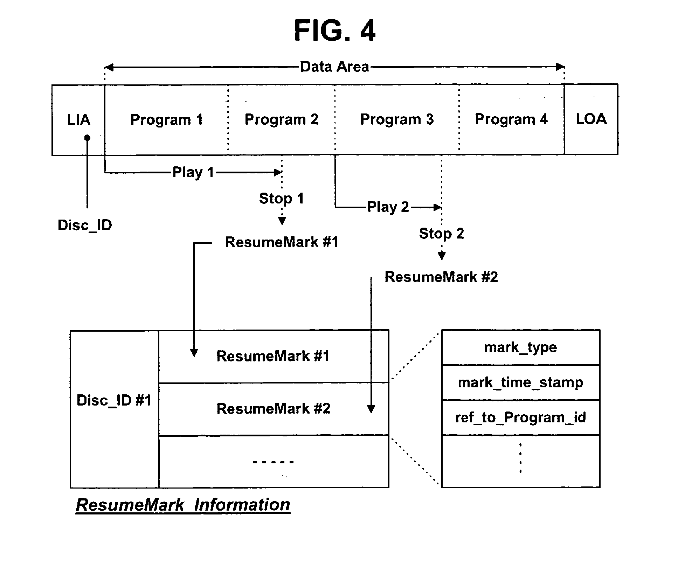

Fig. 4 is a diagram that shows an embodiment of a resume mark managing method for A/V data according to the present invention. The embodiment of the resume marks managing method shown in Fig. 4 will be described using and can be applied to an optical disc apparatus having a configuration shown in Fig. 1. However, the present invention is not intended to be limited. Further, it is assumed that an optical disc recorded with a plurality of programs (e.g., Program 1 to Program 4) on the data area of the optical disc is being used for playback.

For example, when playback of the optical disc is stopped at the request of the user during playback of the second program (e.g., Program 2), the microcomputer 13 can identify a PTS or PSN corresponding to the last playback position where the playback of the optical disc is stopped. The identified PTS is recorded as the mark time stamp (mark_time_stamp) in a first resume mark (e.g., ResumeMark #1). The intrinsic ID assigned to the second program (e.g., Program 2) or the name of the second program may be recorded as the program ID information in the first resume mark ResumeMark #1. Where the second program is the program of the optical disc where playback has been most recently stopped, the first resume mark ResumeMark #1 is recorded with a mark type representing a master resume mark. For example, the mark type information having a value of, for example, "00001111b" representing the master resume mark.

Continuing the example, when playback of the optical disc 10 is carried out again, and subsequently stopped at the request of the user during playback of the third program (e.g., Program 3), the microcomputer 13 generates a second resume mark (e.g., ResumeMark #2) including information about the last playback position where the playback is stopped, and stores the second resume mark ResumeMark #2 preferably in the memory 14. At this time, the second resume mark ResumeMark #2 can be recorded separate from the first resume mark ResumeMark #1, while the first resume mark ResumeMark #1 is preferably not deleted.

That is, the second resume mark ResumeMark #2 can be recorded with a mark time stamp (mark_time_stamp) corresponding to the last playback position where the playback of the optical disc is stopped, a mark type (mark_type), and a program ID (ref_to_Program_id) assigned to the third program. At this time, the mark type information recorded in the first resume mark ResumeMark #1 can be updated with a value of, for example, "00000000b" representing a general resume mark. Also, mark type information having a value of "00001111 b" representing a master resume mark is preferably recorded in the second resume mark ResumeMark #2.

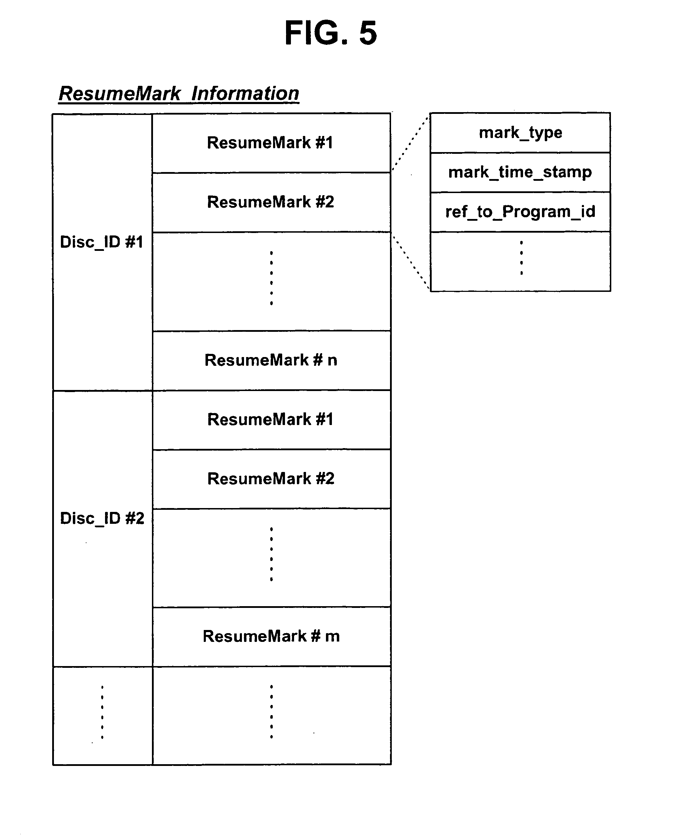

The microcomputer 13 can manage the resume marks described above, in association with intrinsic identification information assigned to the optical disc, for example, disc ID information (Disc_ID) recorded on the LIA of the optical disc. Accordingly, the microcomputer 13 can manage resume marks under the condition in which the resume marks are grouped or sorted by the unit of disc IDs (e.g., Disc_ID #1, #2, ...) corresponding to respective optical discs. Fig. 5 is a diagram that shows in the exemplary form of a table, resume marks stored or sorted by a unit of a disk.

Further, where the optical disc loaded in the optical disc apparatus is a re-writable optical disc, all resume marks associated with the optical disc may be recorded (e.g., all together) on a particular recording area of the optical disc, for example, the LIA. Also, under the condition in which the optical disc is recorded with a plurality programs, the resume marks can be recorded in respective control information fields of the programs associated therewith. When the user requests a resumed playback operation under the condition in which the re-writable optical disc (e.g., recording medium) recorded with embodiments according to the present invention of resume marks loaded in an optional optical disc apparatus other than the optical disc apparatus used to record the resume marks, the other optical disc apparatus preferably can perform the requested resumed playback operation by reading the resume marks recorded on a particular recording area of the optical disc. Where optical discs are played back in a player for playing back A/V data recorded on a recording medium that is capable of storing resume marks therein, it can also be necessary to check whether or not resume marks corresponding to those of the optical disc are stored in the player.

When the user requests a resumed playback operation, the microcomputer 13 preferably reads resume marks stored in the memory 14 while controlling the OSD generator 15 in order to display, on an OSD selection menu, the resume marks, which can be grouped or sorted in association with the disc ID Disc_ID of the optical disc loaded in the optical disc apparatus. Thus, the user can select an optional one of the displayed resume marks.

When an optional resume mark is selected, the microcomputer 13 preferably searches for the last playback position selected by the user, and performs a resumed playback operation for A/V data to successively play back the optical disc from the searched last playback position, by referring to information recorded in the resume mark. On the other hand, when the user requests a resumed playback operation to successively play back the optical disc from a last playback position where the optical disc has most recently been stopped, the microcomputer 13 preferably selects a resume mark recorded with master mark type information by referring to mark type information recorded in respective resume marks. The microcomputer 13 can search for the last playback position by referring to information recorded in the selected resume mark, and successively play back the optical disc from the searched last playback position.

In an optical disc, it is possible to record several programs such as a plurality of one or more TV series, and the user can select one of the programs using a Navigation system. In the related art, there is just one resume mark for resume play, so, it is difficult or impossible to selectively resume play for each of the recorded programs. According to embodiments of the present invention, resume mark can include a program identifier (e.g., ref-to-Program-id) for indicating the corresponding programs.

If a user selects the program for watching on the navigation system, the controller can check the Program Ids in the resume marks and select the resume mark that has the same ID of the user selected program. The controller can then execute the resume play based on selected resume mark. Accordingly, the user can watch the program from the last stop position of selected program.

Further, the mark type (e.g., mark-type) can user other indications or values such as a number instead of the maser and general resume mark indicator. A number for the mark_type can be designated or granted step by step (e.g., sequentially), and the master resume mark should be the resume mark that has the biggest number as mark-type and other numbers are preferably general resume marks. As advantage of using numbers or the like is that updating of the mark-type info in old resume marks (e.g., general) can be concurrently performed.

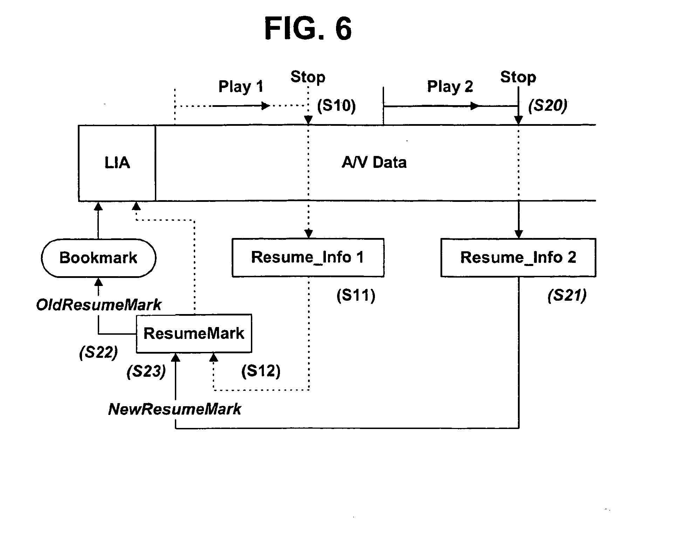

Fig. 6 illustrates a resume mark managing method for A/V data according to another embodiment of the present invention. As shown in Fig. 6, the embodiment of the resume mark managing method is applicable to diverse digital recording media such as optical discs or hard disks (HDD) and to a digital recording/reproducing apparatus such as an optical disc recorder.

The embodiment of the resume mark managing method shown in Fig 6 will now be described using and can be applied to an optical disc apparatus having a configuration shown in Fig. 1. However, the present invention is not intended to be limited. When an optical disc such as a re-writable DVD is initially loaded in the optical disc apparatus, the microcomputer 13 included in the optical disc apparatus or the like can play back A/V data recorded on the data area of the optical disc at the request of the user.

When the playback of the optical disc is stopped at the request of the user (S10), the microcomputer 13 can temporarily store, in the memory 14 or the like, last playback position information (e.g., Resume_Info 1) corresponding to the last playback position where the playback of the optical disc is stopped (S11). The last playback position information includes address information such as a PTS or PSN corresponding to the last playback position where the playback of the optical disc is stopped. When the optical disc is subsequently ejected from the optical disc apparatus, or the optical disc apparatus is turned off, the microcomputer 13 records the last playback position information, temporarily stored in the memory 15, on a particular recording field, for example, a resume mark field assigned to the LIA of the optical disc (S12). Alternatively, the resume information can be only or also stored in the optical disk apparatus.

When the user subsequently requests a resumed playback operation, the microcomputer 13 can read the last playback position information recorded on the particular recording field, that is, the resume mark field. The microcomputer 13 can then successively play back data from the last playback position.

Further, when the user stops the playback operation during the resumed playback operation, or during playback of A/V data other than the data associated with the resumed playback operation (S20), the microcomputer 13 can temporarily store, in the memory 14 or the like, the last playback position information (e.g., Resume_Info 2) corresponding to a last playback position where the playback is stopped (S21).

When the optical disc is subsequently ejected from the optical disc apparatus, or the optical disc apparatus is turned off, the microcomputer 13 preferably records the old resume mark information (e.g., OldResumeMark) recorded on the resume mark field as a new bookmark substitutively in bookmark information included in navigation information recorded on the particular recording field (S22). The new bookmark can be recorded as a last or next bookmark (e.g., Bookmark #(n+1)) following bookmarks (Bookmark #1 to Bookmark #n) included in a bookmark list. Then, the last playback position information temporarily stored in the memory 14 is preferably recorded on the resume mark field in accordance with an updating operation (S23).

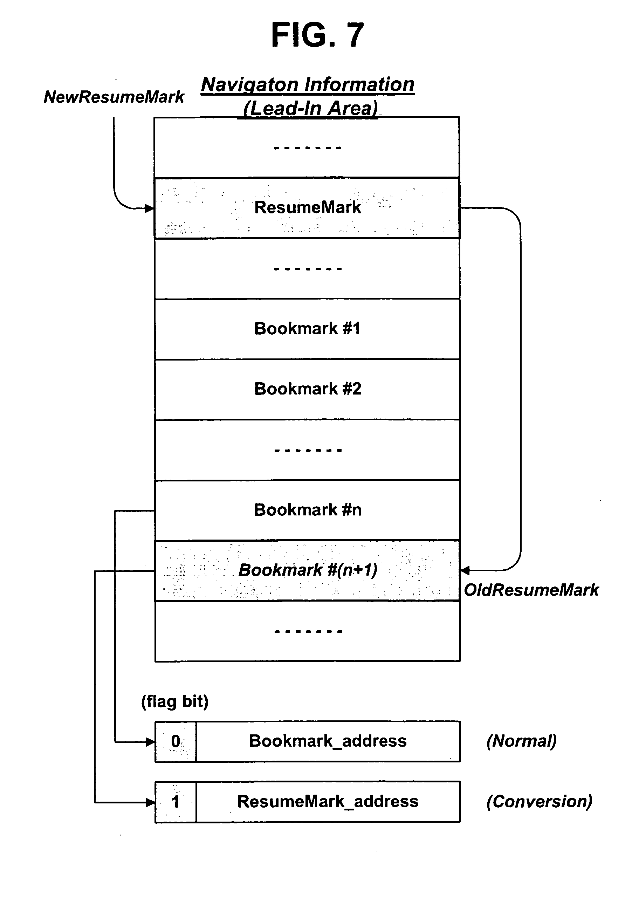

Alternatively, the bookmark substitutively recorded in bookmark information, as described above, may be additionally recorded with a flag bit for distinguishing the bookmark from general bookmarks recorded at the request of the user. For example, where the flag bit additionally recorded in the bookmark is "0", it represents that the bookmark is a general bookmark, and where the flag bit is "1", it represents that the bookmark is recorded with a resume mark. Fig. 7 is a diagram illustrating a exemplary resume mark recorded in an updating operation and a bookmark substitutively recorded in accordance with the embodiment of the present invention shown in Fig. 6.

Further, when a resumed playback request is made under the condition in which new resume mark information is recorded, and the old resume mark information is substitutively recorded as a bookmark in accordance with the above described procedure, the microcomputer 13 preferably reads the new resume mark information recorded on a particular recording field of the optical disc, and all substitutive bookmarks, and displays the read new resume mark information and substitutive bookmarks on a viewable display such as an OSD selection menu.

Accordingly, the user can directly select, through the OSD selection menu, the last playback position where the optical disc has most recently been stopped, and other last playback positions (e.g., previous). The plurality of resume marks can be displayed, for example, in terms of time, program or the like. Also, the microcomputer 13 can search for the most recent resume mark (e.g., master) or an optional one of the last playback positions selected (e.g., by the user) to perform a resumed playback operation for successively playing back data from the searched last playback position. Thus, it is possible to carry out various resumed playback operations according to embodiments of the present invention.

Meanwhile, when playback of the optical disc is stopped, the VDR system 12 can detect last playback position information corresponding to the point of time when the playback of the optical disc is stopped, and additionally records the detected last playback position information as a last bookmark, so as to perform a resume mark managing operation. Further, where the user requests a resumed playback operation under the condition in which no resume mark is stored, the microcomputer 13 preferably displays information representing that there is no resume mark. In this case, the microcomputer 13 plays back A/V data, recorded on the optical disc, selected in accordance with a selection by the user. Alternatively, the A/V data recorded on the optical disc may be played back from its first portion or the like.

As described above, embodiments of a optical disc apparatus and method for using same have various advantages. Embodiments according to the present invention can provide a resume mark managing method for A/V data which allows the user to conveniently search for last playback positions where playback of A/V data has been stopped, respectively. Accordingly, embodiments are capable of successively playing back the A/V data from a selected one of the last playback positions. Further, such additional ones of the resume marks can be controlled as or using bookmarks.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. A method, comprising:
providing data stored on a recording medium; and
using a resume mark for the data including last playback position information and mark type information associated with the resume mark, wherein the mark type includes each of first mark type and a second mark type different from the first mark type.

2. The method according to claim 1, wherein the first mark type is a most recent resume mark and the second mark type is remaining resume marks.

3. The method according to claim 1, wherein the using the resume mark comprises identifying more than one resume mark for the data, wherein a single resume mark is the first mark type and the remaining resume marks are each the second mark type.

4. The method according to claim 3, wherein the first mark type is a master mark type being a most recent resume mark and the second mark type is a general mark type including remaining resume marks having a prescribed order, and wherein the identifying comprises one of storing the resume mark and retrieving the resume mark.

5. The method according to any of claims 1 to 4, wherein the resume marks are identified by numbers, and wherein a largest number is the master resume mark.

6. The method according to any of claims 1 to 5, wherein the using comprises one of identifying, storing and retrieving the resume mark..

7. The method according to any of claims 1 to 6, wherein the last playback position information is a presentation time stamp or address corresponding to a last playback position.

8. The method according to any of claims 1 to 7, wherein the resume mark includes information for identifying a program, playback of which has been stopped, where the recording medium is recorded with a plurality of programs.

9. The method according to claim 8, wherein the program identification information is an intrinsic program ID or a program name.

10. The method according to any of claims 1 to 9, wherein the resume mark is stored in an apparatus for playing back A/V data recorded on the recording medium.

11. The method according to claim 10, wherein one resume mark is previously recorded in the playback apparatus including sorted mark type information based on an intrinsic ID of the recording medium and intrinsic IDs for each of the plurality of programs, comprising:
updating the mark type information of the one resume mark to represent a general resume mark; and
storing a current resume mark including the identified last playback position information and mark type information representing a master resume mark.

12. The method according to any of claims 1 to 9, wherein the resume mark is recorded in a particular recording field of the recording medium.

13. The method according to claim 12, wherein under a condition in which there is a one resume mark previously recorded in the particular recording field of the recording medium includes the mark type information representing a master resume mark, comprising:
updating the mark type information of the one resume mark to represent a general resume mark; and
storing a current resume mark including the identified last playback position information and mark type information representing a master resume mark.

14. The method according to claims 12 or 13, wherein when a plurality of programs are recorded on the recording medium, the resume mark includes control information of one of an associated one of the programs and control information of the recording medium that includes information for identifying the associated program.

15. The method according to any of claims 1 to 14, wherein the recording medium is recorded with a plurality of selectable programs, comprising:
selecting one of the programs for playback;
identifying a resume mark having an program id corresponding to the selected program; and
playing back the selected program from the identified resume mark.

16. A resume mark managing method for data comprising:
reading two or more resume marks each recorded with a last playback position of a corresponding data; and
playing back the corresponding data recorded on a recording medium based on a selected one of the read resume marks.

17. The resume mark managing method according to claim 16, wherein the resume marks are stored in at least one of an apparatus for playing back data recorded on the recording medium and a prescribed recording field of the recording medium.

18. The resume mark managing method according to claim 17, comprising:
receiving a request for a resumed playback operation;
displaying the resume marks using a selection image allowing a user to select desired information from the displayed resume marks; and
playing back the data recorded on the recording medium in accordance with the selection by the user.

19. The resume mark managing method according to claim 17, comprising:
receiving a request for a resumed playback operation starting from a last playback position where the playback of A/V data has most recently been stopped;
searching the read resume marks for information associated with the recording medium to determine whether there is information associated with the recording medium;
selecting from the determined associated information, a last playback position corresponding to mark type information representing a master resume mark; and
playing back the A/V data from the selected last playback position.

20. The resume mark managing method according to claim 19, wherein the A/V data is played back from a first position when no information exists for the resume marks.

21. The resume mark managing method according to claim 16, wherein the recording medium is recorded with a plurality of selectable programs, comprising:
selecting one of the programs for playback;
identifying a resume mark having an program id corresponding to the selected program; and
playing back the selected program from the identified resume mark.

22. A resume mark managing method for A/V data comprising:
identifying information about a current last playback position of data recorded on a recording medium where the playback is stopped;
recording last playback position information from a resume mark as a bookmark in bookmark information; and
updating the resume mark with the current last playback position information.

23. The method according to claim 22, wherein the last playback position information recorded in the bookmark information as the bookmark has an identifier for distinguishing the bookmark from general bookmarks.

24. The method of claim 23, wherein the identifier is one of a flag bit and a prescribed position in the bookmark information.

25. The method of claims 23 or 24, comprising:
reading particular bookmarks from the bookmark information recorded on the recording medium; and
playing back data recorded on the recording medium based on the read particular bookmarks.

26. The method according to claim 25, comprising:
receiving a request for a resumed playback operation;
displaying resume marks using a selection image allowing a user to select desired information from the displayed resume mark and the displayed particular bookmarks; and
playing back the data recorded on the recording medium in accordance with the selection by the user.

27. The method according to claim 22, wherein the last playback positions stored in the bookmark information as previous resume marks, and wherein the recording medium is recorded with a plurality of selectable programs, comprising:
selecting one of the programs for playback;
identifying a resume mark having an program id corresponding to the selected program; and
playing back the selected program from the identified resume mark.

28. A resume mark managing method for A/V data comprising:
if playback of A/V data recorded on a recording medium is stopped, identifying information about a last playback position where the playback is stopped; and
recording the identified last playback position information as a bookmark in bookmark information recorded on the recording medium.

29. The method according to claim 28, wherein the last playback position information additionally recorded in the bookmark information as the bookmark has a identifier for distinguishing the bookmark from bookmarks that do not represent resume marks.

30. The method according to claims 28 or 29, comprising:
reading resume mark bookmarks from bookmark information recorded on the recording medium; and
playing back A/V data recorded on the recording medium, based on the read resume mark bookmarks.

31. The resume mark managing method according to claim 30, comprising:
receiving a request for a resumed playback operation;
determining whether there are resume mark bookmarks;
displaying the read particular bookmarks in the form of a selection menu allowing a user to select a desired resume mark bookmark from the displayed resume mark bookmarks; and
playing back the data recorded on the recording medium in accordance with the selection by the user.

32. The resume mark managing method according to claim 31, displaying information representing that there is no last playback information when there are none of said resume mark bookmarks.

33. The method according to any of claims 28 to 32, wherein the bookmark information is stored in at least one of an apparatus for playing back the A/V data recorded on the recording medium and a prescribed recording field of the recording medium.

34. The method according to any of claims 28 to 33, wherein the recording medium is recorded with a plurality of selectable programs, and wherein a plurality of resume mark bookmarks are stored each with an associated program id, comprising:
selecting one of the programs for playback;
identifying a resume mark bookmark having an program id corresponding to the selected program; and
playing back the selected program from the identified resume mark bookmark.
